# EUROPÄISCHE PATENTSCHRIFT

(11) **EP 1 847 816 B1**
(45) Veröffentlichungstag und Bekanntmachung des Hinweises auf die Patenterteilung: **20.03.2013**
(21) Anmeldenummer: 07003362.6
(22) Anmeldetag: 16.02.2007
(51) Int. Cl.: H02G 7/16, H02G 7/05

(54) **Verfahren und Vorrichtung zum Erfassen der Last auf Überlandleitungen**
Method and device for determining the load of overhead lines
Procédé et dispositif de détermination de la charge des lignes aériennes

(30) Priorität: 21.03.2006 DE 102006013248
(43) Veröffentlichungstag der Anmeldung: 24.10.2007
(73) Patentinhaber: Stadtwerke Mainz AG, 55118 Mainz (DE)
(72) Erfinder: Flohr, Peter, 55128 Mainz (DE)
(74) Vertreter: Graf Glück Kritzenberger

(56) Entgegenhaltungen:
- WO-A-02/47232
- WO-A1-2005/119875
- US-A- 3 771 356
- US-A- 4 210 902
- US-A- 5 235 861
- US-A- 6 018 152
- US-A1- 2002 005 668
- US-B2- 6 727 604

## Beschreibung

Die vorliegende Erfindung betrifft ein Verfahren und eine Vorrichtung zum Erfassen der auf Leitungen einwirkenden Lasten, welche Leitungen an Leitungsmasten oberirdisch aufgehängt sind.

Telefon- als auch Stromleitungen werden üblicherweise an den Leitungsmasten über Aufhängungsanordnungen aufgehängt, die häufig, bei Hochspannungsleitungen, in Form abgehängter Isolatorkörper vorgesehen sind.

Die Leitungsmasten für diese Leitungen bestehen entweder aus Holz, Beton oder aus Stahlträgem, die insbesondere bei Hochspannungsleitungen in Form von Skelettgerüsten ausgebildet sind. Diese Leitungsmasten sind in ihrer Tragfähigkeit konzipiert für das Gewicht der Leitungen, inklusive einer gewissen Sicherheitsspanne, die z.B. noch einmal um den Faktor 0,5 - 2 über dem tatsächlichen Leitungsgewicht liegen kann.

Wie die Versorgungskatastrophe im Münsterland im Jahre 2005 gezeigt hat, treten zunehmend Wetterverhältnisse auf, bei denen die Leitungen aufgrund von Schneefall oder Eisbefall ein Gewicht erhalten, das ihr ursprüngliches Eigengewicht um ein Vielfaches überschreitet. Ein derartiger Zustand kann dazu führen, dass die Leitungsmasten zusammenbrechen und ganze Regionen von der Stromversorgung abgeschnitten werden.

Es ist daher Aufgabe der Erfindung, ein Verfahren und eine Vorrichtung zu schaffen, die das Gewicht der Leitungen an den Masten überwachen und aufgrund dieser Werte eine Gefahrensituation zu erkennen helfen, bzw. aufgrund der Einleitung von entgegenwirkenden Maßnahmen die Gefahr sogar zu beheben helfen.

Diese Aufgabe wird erfindungsgemäß durch ein Verfahren gemäß Anspruch 1 und eine Vorrichtung gemäß Anspruch 6 gelöst. Vorteilhafte Weiterbildungen in der Erfindung sind Gegenstand der entsprechenden Unteransprüche.

Die Erfindung basiert darauf, dass das Leitungsgewicht an den Leitungsmasten über Erfassungseinrichtungen erfasst wird. Diese Erfassungseinrichtungen haben in der Regel Druck- oder Kraftsensoren, die das Gewicht der Leitungen und/oder auf die Leitungen wirkende Kräfte an den Aufhängungspunkten an den Masten erfassen. Selbstverständlich muss nicht jeder Leitungsmast mit einer derartigen Erfassungseinrichtung versehen sein. Es sollte ausreichen, wenn lediglich jeder 2. bis 20. Mast mit einer derartigen Erfassungseinrichtung versehen ist. Vorzugsweise werden die von der Erfassungseinrichtung gemessenen Leitungsgewichte über eine Signaleinrichtung einer Zentrale, üblicherweise einer Leitzentrale der Versorgungswerke übermittelt. In dieser Zentrale laufen die Gewichtsdaten der Erfassungseinrichtungen der Region zusammen. Die Leitzentrale erhält damit ein Bild darüber, ob in bestimmten Regionen ein außergewöhnlicher Zuwachs des Leitungsgewichts festzustellen ist.

Vorzugsweise erfassen die Kraftsensoren, z.B. Piezoelemente nicht nur in der vertikalen Richtung sondern auch in der horizontalen Richtung, so dass nicht nur das Gewicht der Leitungen bzw. dessen Zunahme durch Eis oder Schnee erfasst wird, sondern auch horizontal einwirkende Kräfte aufgrund von Wind, die aufgrund des erhöhten Leitungsquerschnittes bei Eis- oder Schneebefall ebenfalls erhöht sein dürften.

Vorzugsweise ist entweder die Erfassungseinrichtung an einigen Leitungsmasten und/oder an der Zentrale mit einer Messvorrichtung für die Temperatur und/oder für Witterungsverhältnisse wie z.B. Regen- oder Schneesensoren versehen, so dass in der Zentrale entweder automatisiert oder mittels Bedienpersonen evtl. eine Korrelation zwischen der Zunahme des Leitungsgewichts und den Witterungsverhältnissen festgestellt werden kann. Vorzugsweise ist die Erfassungseinrichtung auch mit einer Windgeschwindigkeits- und/oder Windrichtungsmesseinrichtung versehen, so dass man Informationen erhält, ob die Leitungen und damit auch die Leitungsmasten auch horizontalen Kräften unterworfen sind.

Stellt die Zentrale eine außergewöhnliche Gewichtszunahme von bestimmten Leitungen oder die Zunahme von auf diese wirkenden Vertikal- und/oder Horizontalkräften fest, so kann sie durch die Einleitung physikalischer Maßnahmen dieser Gewichtszunahme entgegenwirken. So kann der regionale Stromtransport in den Leitungen mit der Gewichtszunahme durch Abschaltung von Leitungen, die diese Gewichtszunahme nicht aufweisen, erhöht werden, was dazu führt, dass sich die Leitungen aufgrund des erhöhten Stromflusses erwärmen, was zu einem Abtauen von Eis oder Schnee und damit zu einer Gewichtsabnahme der Leitungen führt. In der Regel sind mehrere Hochspannungsleitungen an Hochspannungsmasten aufgehängt, in welchem Fall es möglich ist, den gesamten Stromfluss abwechselnd immer nur über ein einziges Hochspannungskabel zu führen, bis das Gewicht des entsprechenden Hochspannungskabels wieder auf einen als normal einzustufenden Schwellenwert abgesunken ist. Vorzugsweise geschieht die Ableitung von Alarmsignalen und/oder von automatischen Schaltvorgängen zur Umschaltung der Leitungen aus den Gewichtssignalen automatisiert anhand von Schwellenwerten, die als Vergleichswerte vorab für die entsprechenden Leitungen eingegeben worden sind, wobei die Generierung eines Alarm oder Aktivierungssignals in bekannter Weise mittels eines Komparators erfolgt, der die lokalen Gewichtswerte über eine vorbestimmte Region oder Anzahl integriert oder einzeln mit dem Vergleichswert vergleicht, welches Vergleichsergebnis im positiven Falle (Übersteigen des Vergleichswertes) als Alarm bzw. Aktivierungswert gewertet wird.

Um eine Sicherheit gegen die Fehlfunktion einzelner Erfassungseinrichtungen zu bieten, kann es vorgesehen sein, dass die Signale über einen gewissen regional zusammenhängenden Bereich integriert werden. So können z.B. die Messwerte gemittelt über die Signale von 5 bis 10 am nächsten zueinander angeordneter Leitungsmasten mit Erfassungseinrichtung betrachtet werden, um die Fehlfunktion einer einzelnen Erfassungseinrichtung auszuschließen. Weiterhin ist es möglich, durch eine Einzelbetrachtung der erhaltenen Signale der Erfassungseinrichtungen und/oder an sich bekannte statistische Betrachtungen festzustellen, ob eine der Erfassungseinrichtungen eine Fehlfunktion aufweist.

Prinzipiell kann die Einleitung von gewichtsreduzierenden Maßnahmen, wie z.B. die Umschaltung von Leitungen in oben beschriebener Weise automatisiert durch eine Steuerungseinrichtung in der Zentrale erfolgen, die die entsprechenden Schalter zum Umschalten der Ströme in Schaltwerken des regionalen Versorgungsnetzes bedient. Vorzugsweise ist eine derartige Steuerung prozessorgesteuert und in die Steuerungseinrichtung der regionalen Versorgungszentrale des/der Energieversorger(s) integriert.

Eine Grundidee der Erfindung besteht darin, dass die regionale Stromverteilung durch eine zentrale Steuerung so verändert wird, dass in der betroffenen Überlandleitung der Strom auf Kosten des Stromflusses in anderen Überlandleitungen zunimmt, was zu deren abtauen beiträgt. Hierfür erfasst die Steuerung den Stromfluss in den unterschiedlich verlaufenden regionalen Strompfaden, d.h. in unterschiedlich verlaufenden Überlandleitungen (die in der Regel jeweils eine Vielzahl an Stromleitungen für die unterschiedlichen elektrischen Phasen eines üblichen Drehstromnetzes aufweisen). Weiterhin erfasst sie eine durch die Erfassungseinrichtungen detektierte Überlast in Strompfaden (Überlandleitungen). Hierfür enthält die Steuerung ein Berechungsmodul für Schaltaltemativen, welches zum Beispiel unter Verwendung eines genetischen Algorithmus Schaltalternativen für eine Stromumleitung berechnet. Die durch den Berechnungsalgorithmus generierten Lösungen werden einem Bewertungsmodul zuführt, welches unter Einsatz einer Kostenfunktion die generierten Lösungen bewertet. Die Kostenfunktion hat als Kosten die Strommaximierung in der betroffenen Überlandleitung, bzw. in den betroffenen Überlandleitungen als auch die Minimierung der Änderung des Stromflusses in den nicht betroffenen Gebiet, da die Stromumleitung möglichst ohne Einfluss auf die sonstige Umgebung sein soll, die von der Überlast nicht betroffen ist. Diese beiden Kosten der Kostenfunktion können in Abhängigkeit von den aktuellen Bedürfnissen (Höhe der Überlast, Gesamtbelastung des Netzes etc.) durch Faktoren mehr oder weniger stark gewichtet werden. Von dem Berechnungsmodul kann eine Lösung als Schaltlösung verwendet werden, wenn z.B. ein bestimmter Schwellenwert erreicht wird (z.B. gewünschte relative oder absolute Strommaximierung in der betroffenen Leitung), wenn eine bestimmte Anzahl an Berechnungen durchgeführt worden ist, oder bei Erreichen eines definierten Abbruchkriteriums (z.B. Zeit, Anzahl an Lösungsgenerationen oder Kostenwert der gefundenen Lösung). Wenn ein Abbruchkriterium noch nicht erfüllt ist, können Lösungen mit einem günstigen Kostenwert dem Berechungsmodul wieder zugeführt werden, um eine neue Generation von Lösungen zu erzeugen. Im Falle der Verwendung eines genetischen Algorithmus können Lösungen durch Mutation, Kreuzung oder andere gängige Techniken erzeugt werden.

Neben der Umleitung des regionalen Stromflusses auf einzelne Leitungen, d.h. der Erwärmung der Leitungen aufgrund eines starken Stromflusses gibt es noch die Möglichkeit, an den Leitungsmasten Aktuatoren vorzusehen, durch welche die Leitungen in eine mechanische Schwingung versetzt werden. Eine derartige Schwingung könnte durch piezoelektrische, elektromechanische oder elektromagnetische Aktuatoren in die Leitungen eingeleitet werden. Es sind dabei Schwingungsamplituden von 1 mm bis 10 cm vorstellbar, bei Schwingungsfrequenzen zwischen 5 Hz und 20 kHz. Welche Amplitude und Frequenz am besten geeignet ist, lässt sich vorteilhafterweise in Versuchsreihen ermitteln. Die mechanische Schwingungseinleitung kann entweder in einer horizontalen Ebene, einer vertikalen Ebene oder in einer Art Rotationsauslenkung geschehen, die z.B. über einen Elektromotor in die Leitungsaufhängung eingebracht werden könnte.

Die Signaleinrichtung kann für die Signalübertragung prinzipiell alle bekannten Signalübertragungsmöglichkeiten ausschöpfen, wie z.B. drahtlose Fernübertragung oder Übertragung auf dem Mobilfunknetz. Vorzugsweise wird jedoch für die Signalübertragung wenigstens eine der von den Leitungsmasten getragenen Leitungen verwendet, auf die das Signal durch die Signaleinrichtung nach entsprechender Umformung und Verstärkung vorzugsweise aufmoduliert wird. Eine Unterscheidung der Signale der einzelnen Erfassungseinrichtungen lässt sich in der Zentrale über die Einbindung eines Identifikationswertes in das übertragene Signal, z.B. mittels Header erzielen, welches der Zentrale mitteilt, von welcher Erfassungseinrichtung der gemessene Wert übermittelt wurde.

Es ist prinzipiell möglich, die Erfassungs- und Überwachungsvorrichtung in oben beschriebener Weise kontinuierlich laufen zu lassen. Es ist auch möglich, die Erfassungseinrichtung lediglich dann in Gang zu setzen, wenn eine Temperatur- oder Witterungsmesseinrichtung an der Zentrale Witterungsverhältnisse detektiert, die eine Gewichtszunahme der Leitungen aufgrund Eis- oder Schneebefall möglich erscheinen lassen. Vorzugsweise sind deshalb die Signaleinrichtungen an den Leitungsmasten zur bidirektionalen Datenübertragung vorgesehen, so dass sie von der Zentrale Steuersignale empfangen können wodurch es möglich ist, von der Zentrale aus den Beginn und den Stopp der Messung bzw. die Messhäufigkeit oder andere Messparameter der Erfassungseinrichtung zu beeinflussen bzw. festzusetzen.

Darüber hinaus dürfte es vorteilhaft sein, wenn zumindest an vereinzelten Leitungsmasten Vorrichtungen zur Erfassung der Temperatur und/oder der Wetterverhältnisse vorgesehen sind.

Falls die Stromerhöhung in den betroffenen Leitungen zu einer Verhinderung des Schnee- oder Eisbefalls nicht ausreicht, ist die Zentrale mit einer Schalteinrichtung verbunden, mit der sich die betroffenen Leitungen abschalten lassen, um im Fall eines Schnee- oder Eisbruchs der Leitungen und/oder der Leitungsmasten eine Gefährdung Dritter durch Stromschlag zu verhindern. Gleichzeitig wird dadurch verhindert, dass durch den Kurzschluss zusammenbrechender Leitungen gesamte Schaltanlagen oder gar Kraftwerke außer Betrieb gesetzt werden.

Falls die Zentrale oder wenigstens eine der Erfassungseinrichtungen mit einer Messeinrichtung zur Erfassung der Temperatur der Leitung verbunden ist, ist es möglich, zu überprüfen, inwiefern durch eine Erhöhung des Stromflusses durch die Leitung eine Erwärmung der entsprechenden Leitung stattfindet. Dies würde zusammen mit der laufenden Messung des Gewichts deutlichen Aufschluss darüber liefern, ob die eingeleitete Stromerhöhungsmaßnahme zur Reduzierung des Eis- oder Schneebefalls wirksam ist. Es ist selbstverständlich auch möglich, die Temperatursignale der Leitung zur Steuerung des Stromflusses zu verwenden. So kann durch entsprechendes Auf/Abschalten der Stromlasten anderer Leitungen ein gewünschter Temperaturbereich für die Leitung, z.B. zwischen 20 und 50° eingestellt werden, um ein schnelles und für die Leitung ungefährliches Abtauen des Schnee- oder Eisbefalls an den Leitungen zu erzielen.

Die Erfindung wird nachfolgend beispielsweise in der schematischen Zeichnung beschrieben. In dieser zeigen:
- Fig. 1: eine Vorderansicht eines Hochspannungsmasten für eine Überlandleitung mit einer Erfassungseinrichtung,
- Fig. 2: ein Leitbild des Kreuzungspunktes von drei Überlandleitungen zwischen drei Schaltwerken und einer Zentrale,
- Fig. 3: eine Seitenansicht auf einen isolierten Träger einer Hochspannungsleitung mit integriertem Aktuator, und
- Fig. 4: eine Schemaschaltung einer Steuerung zur automatischen Stromumleitung in einem regionalen Stromnetz.

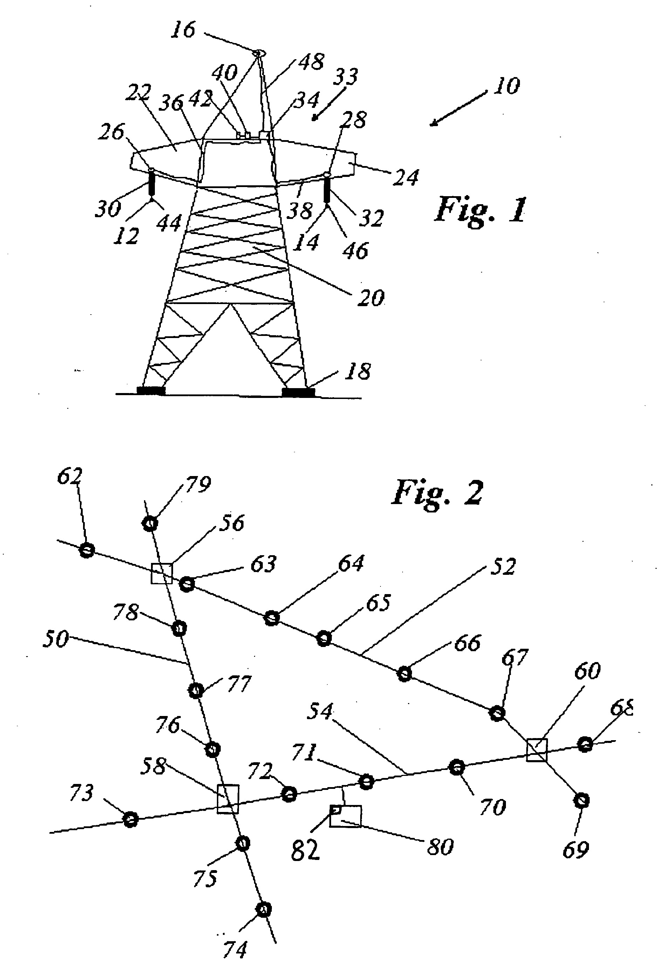

Figur 1 zeigt einen Hochspannungsmasten 10, z.B. für die Aufhängung von zwei 760 kV-Hochspannungsleitungen 12, 14 und einer Schutzleitung 16, die auf einer geringeren Spannung geführt ist und ebenfalls zur Blitzableitung und als Datenübertragung dient. Der Hochspannungsmast 10 ruht auf vier quadratisch angeordneten Betonfundamenten 18, auf welchem sich ein in etwa quadratisches Stahlgerüst 20 erstreckt, in dessen oberen Bereich sich zwei einander abgewandte Querarme 22, 24 horizontal erstrecken. An diesen Seitenarmen 22, 24 sind an Lastmesseinrichtungen 26, 28 für vertikale und horizontale Kräfte Isolatoren 30, 32 abgehängt, an welchen die Hochspannungsleitungen 12, 14 isoliert gegenüber dem Mast 10 gehalten sind. Die Erfassungseinrichtung 33 für das Gewicht der Leitung 12, 14 bzw. auf die Leitungen wirkende Kräfte umfasst neben den bereits genannten Lastmesseinrichtungen 26, 28, die z.B. in Form von Piezoelementen ausgebildet sind, eine Signaleinrichtung 34, an welche die Ausgangssignale der Lastmesseinrichtungen 26, 28 über Datenleitungen 36, 38 übermittelt werden. Die Erfassungseinrichtung 33 ist des Weiteren mit einem Temperatursensor 40 für die Umgebungstemperatur und mit einem Wind- (Windgeschwindgkeits- und Windrichtungs) und Regensensor 42 verbunden, um auf diese Weise aktuelle Daten über die Witterungseinflüsse zu erhalten. Weiterhin ist im Bereich der Aufhängung 30, 32 an der Hochspannungsleitungen 12, 14 jeweils wenigstens ein Temperatursensor 44, 46 angeordnet, der die Temperatur der Hochspannungsleitungen 12, 14 erfasst und drahtlos an die Signaleinrichtung 34 sendet. Die Energie für die Transmittereinrichtungen der Temperaturmesseinrichtung 44, 46 wird vorzugsweise induktiv über den Stromfluss in den Hochspannungsleitungen bereitgestellt.

Die Erfassungseinrichtung 34 ist über eine Datenleitung 48 mit der Schutzleitung 16 verbunden, wodurch der Datentransfer mit einer Leitzentrale der regionalen Energieversorgung stattfindet. Statt dem Schutzleiter könnten auch die Hochspannungsleitungen selbst oder eine drahtlose Übertragungstechnik z.B. über Mobilfunk verwendet werden.

Ein derartiger Hochspannungsmasten ermöglicht die Erfassung sowohl des Gewichts der Hochspannungsleitungen als auch der aktuellen Wetterbedingungen wie Temperatur und Niederschlag als auch die Temperatur der Hochspannungsleitungen selbst.

Figur 2 zeigt ein Leitbild von drei Überlandleitungen 50, 52, 54, die an ihren Kreuzungspunkten über Schaltwerke 56, 58, 60 miteinander schaltbar verbunden sind. Die Schaltwerke ermöglichen sowohl das Schalten der Überlandleitungen insgesamt als auch die An- und Abschaltung einzelner Leitungen einer Überlandleitung, die insbesondere bei hohen Spannungsniveaus aus mehr als sechs Leitungen bestehen können. In dem Leitbild sind Hochspannungsmasten mit Erfassungseinrichtungen gemäß der in Figur 1 gezeigten Art in Form schwarzer Kreise und mit den Bezugszeichen 62 - 79 bezeichnet. In dem Leitbild der Figur 2 sind nur die Hochspannungsmasten mit Erfassungseinrichtung gemäß Figur 1 dargestellt. Dazwischen liegende Hochspannungsmasten sind aus Gründen der Übersichtlichkeit nicht gezeigt. Es wird davon ausgegangen, dass nur jeder zehnte Hochspannungsmast mit einer Erfassungseinrichtung gemäß Figur 1 versehen ist. In Figur 2 ist weiterhin eine zentrale Leitstelle 80 dargestellt, die leitungsmäßig mit der Schutzleitung 16 und/oder den Hochspannungsleitungen 12,14 der Überlandleitungen 50, 52, 54 verbunden ist und die Signale von den Erfassungseinrichtungen 33 aller in der Umgebung befindlichen Hochspannungsmasten 62 - 79 erhält. Vorzugsweise legen die Erfassungseinrichtungen 33 die Messsignale in Form eines Datenblocks auf die Schutzleitung 16, bei welchem jedem Datenblock ein Header vorausgeht, in welchem die Identifikationsdaten der Erfassungseinrichtung bzw. des entsprechenden Hochspannungsmasten enthalten sind. Die Zentrale 80 weiß damit genau, von welchem Hochspannungsmast die entsprechenden Signale kommen. Die zentrale Leitstelle 80 ist weiterhin mit den Schaltanlagen 56, 58 und 60 verbunden und ist in der Lage, den Stromfluss über die einzelnen Leitungen entsprechend der Ab- und Anschaltung einzelner Leitungen zu steuern.

Eine Grundidee der Erfindung besteht somit darin, dass die regionale Stromverteilung über Überlandleitungen so umgelenkt wird, dass der Stromfluß in Regionen mit Eisbildung verstärkt wird auf Kosten der Stromführung über andere Strompfade (Überlandleitungen) in wettermäßig unkritischen Regionen, in denen die Gefahr der Eisbildung nicht vorhanden oder geringer ist. Durch eine regionale oder überregionale Stromumleitung wird somit die Stromzufuhr in einer bestehenden Überlandleitung erhöht, was sich durch eine lastsensible Steuerung erzielen läßt. So ist in einer Leitzentrale 80 oder an einer beliebigen anderen Stelle vorzugsweise eine Steuerung 82 vorhanden, die den Stromfluß über alternative Strompfade (Überlandleitungen 50, 52, 54) in der Region erfasst, und ebenfalls die Signale der Erfassungseinrichtungen direkt oder mittelbar erhält. Die Steuerung ist mit Mitteln zum Ansteuern der Schaltwerke zwischen den unterschiedlichen regionalen Strompfaden (Überlandleitungen) versehen. Die Steuerung enthält ein Modell der Strompfade bzw. Überlandleitungen und deren Kreuzungspunkte. Im Fall einer Gewichtszunahme in einem Strompfad, werden in dem Modell unter Verwendung aktueller Stromflüsse die Abschaltung alternativer Strompfade simuliert. Zumindest die besten Lösungen für eine Stromzunahme werden gespeichert. Schließlich wird in einer Vergleichseinrichtung die Lösung herausgefunden, die die geringsten Auswirkungen auf die Stromverteilung insgesamt mit der besten Stromzunahme in dem gefährdeten Strompfad verbindet. Im vorliegenden Beispiel wäre dies eine Unterbrechung des Stromflusses zwischen Überlandleitung 50 und 54 durch Öffnen der Schalter in der Schaltanlage 58. Dies tangiert nicht die Stromzufuhr in den beiden Überlandleitungen selbst, sondern nur deren Stromtransport zwischen den Kreuzungspunkten bzw. Schaltanlagen 56 und 60. Die Steuerung ist mit Mitteln versehen, um die Schaltanlagen beliebig zu betätigen. Selbstverständlich sind in einem regionalen Netz nicht nur zwei parallele Strompfade 52 und 50, 54 zwischen zwei Kreuzungspunkten 56, 60 vorgesehen sondern auch drei oder mehrere.

Die Tätigkeit der Erfindung wird nun anhand eines Szenarios beschrieben, bei welchem in der Überlandleitung 52 zwischen den Schaltanlagen 56 und 60 eine starke Gewichtszunahme an den Erfassungseinrichtungen 33 der Hochspannungsmasten 63 - 67 festgestellt wird. Die Zentrale stellt fest, dass das Gewicht der beiden Hochspannungsleitungen 12, 14 der Überlandleitung 52 in dem Bereich zwischen den Schaltanlagen 56 und 60 auf das Doppelte angestiegen ist. Gleichzeitig erhält die Zentrale durch die Temperatursensoren 40 und Wind- und Regensensoren 42 der Erfassungseinrichtungen 33 einzelner Hochspannungsmasten 63 - 67 die Information, dass die Temperatur auf einen Wert von - 3 °C abgesunken ist und starker Schneefall als auch Wind herrscht. Weiterhin erhält die Zentrale über die Temperaturmesseinrichtung 44, 46 an den Hochspannungsleitungen 12, 14 die Mitteilung, dass die Temperatur dieser Leitungen auf etwa - 1 ° abgesunken ist. Die Zentrale 80 hat eine zentrale Steuerung, die ebenfalls Informationen darüber enthält, wie der Stromfluss zwischen den verschiedenen Leitungen verläuft. So wird festgestellt, dass zwischen den Schaltanlagen 56 und 60 etwa 60 % des Stroms über die Überlandleitung 52 fließt, jedoch 40 % des Stroms über die Überlandleitungen 50 und 54 über die Schaltanlage 58.

Da das Gewicht der Hochspannungsleitungen 12, 14 inzwischen auf das Doppelte angestiegen ist, welcher Wert als Schwellwert für ein aktives Eingreifen in den Stromfluss betrachtet wird, schaltet die Zentrale 80 den gesamten Stromfluss zwischen den Schaltanlagen 56 und 60 über die Überlandleitung 52, wodurch der Stromfluss in den beiden Hochspannungsleitungen 12, 14 der Überlandleitung 52 um 67 % ansteigt. Die Zentrale 80 übermittelt ein Aktivierungssignal an die Erfassungseinrichtungen 33 der Hochspannungsmasten 63 - 67, wodurch die Messfrequenz der Erfassungseinrichtung von einmal pro Stunde auf einmal pro fünf Minuten heraufgesetzt wird. Die Zentrale erhält von den Erfassungseinrichtungen der entsprechenden Hochspannungsmasten die Information, dass nach der Erhöhung des Stromflusses um 67 % die Temperatur der Hochspannungsleitungen auf + 1 ° angestiegen ist, jedoch aufgrund des starken Schneefalls immer noch eine Gewichtszunahme zu verzeichnen ist, wenngleich diese auch langsamer ausfällt. Nachdem die Gewichtszunahme weiterhin auf das 2 ½-fache des ursprünglichen Gewichts angestiegen ist, schaltet die Zentrale 80 über die Schaltanlagen 56 und 60 die beiden Hochspannungsleitungen 12, 14 im 20-Minuten-Takt abwechselnd, so dass der bereits um 67 % erhöhte Stromfluss nun in der gerade stromführenden Leitung auf das Doppelte ansteigt. Die Signalübertragungsfrequenz der Erfassungseinrichtung 33 wird seitens der Zentrale 80 auf einen 2-Minuten-Takt erhöht. Es stellt sich heraus, dass aufgrund dieser Maßnahme die Temperatur der gerade stromführenden Leitung auf + 10° ansteigt und dass das Gewicht der Leitung innerhalb einer Viertelstunde auf das 1½ -fache abgesunken ist. Die Zentrale fährt nun alternierend die beiden Leitungen 12, 14 der Überlandleitung 52 im 20- 30-Minuten-Takt in obiger Weise auf Überlast, bis das Gewicht wieder deutlich unter den ersten Schwellenwert gefallen ist. Danach werden wieder beide Leitungen 12, 14 gleichzeitig geschaltet, die weiterhin durch die Umleitung des ursprünglich über die Überlandleitungen 50 und 54 fließenden Stroms immer noch unter einem erhöhten Stromfluss (+67%) stehen. Auf diese Weise wird ein Mastbruch der Hochspannungsmasten im Bereich der Überlandleitung 52 verhindert und die Stromversorgung der Region gesichert.

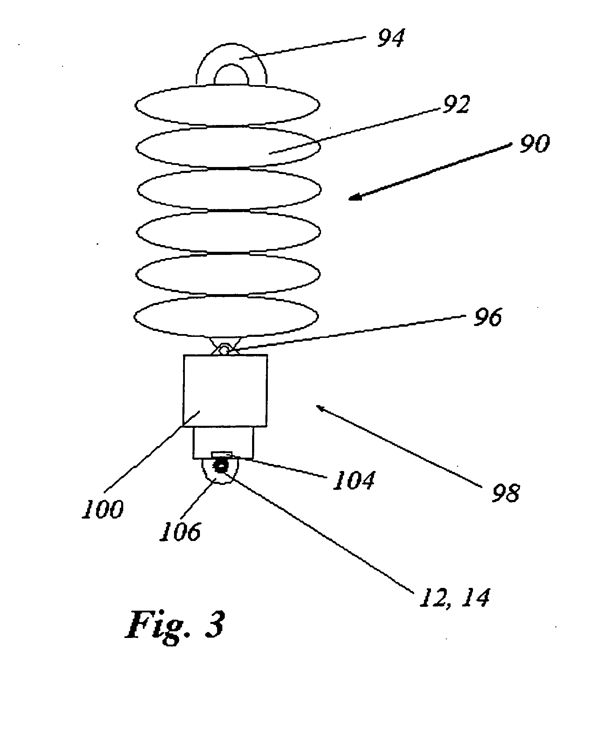

Figur 3 zeigt eine Ausführungsform eines Isolators 90, der anstelle der Isolatoren 30, 32 in dem Hochspannungsmast der Figur 1 eingesetzt werden kann. Der Isolator 90 enthält einen Isolatorenkörper 92 aus Keramiktellern, die dazu vorgesehen sind, eine Isolation zwischen dem Aufhängungspunkt 94 des Isolators 90 am Hochspannungsmast und dem Aufhängungspunkt 96 für die Leitung 12, 14 zu erzeugen. Zwischen dem Aufhängungspunkt 96 und der Leitung 12, 14 befindet sich ein Aktuator 98 in Form eines Elektromagneten mit einem großen hohlzylindrischen Spulenkörper 100, in welchem ein ferromagnetischer Kern 102 vertikal beweglich ist. An dem Kern ist eine Temperaturmesseinrichtung 104 für die Temperatur der Leitung 12, 14 vorgesehen als auch eine Aufhängungsschelle 106, die die Leitung 12, 14 umgreift und gegen den Kern 102 mit der Temperaturmesseinrichtung 104 festlegt. Der Betätigungsweg des Kerns 102 in dem Spulenkörper 100 beträgt 2 cm, während die Schwingungsfrequenz 50 Hz beträgt. Der Aktuator 98 ist in nicht dargestellter Weise mit der Erfassungseinrichtung und einer Stromversorgung verbunden und kann, angesteuert durch die Zentrale 80 der Figur 2, den Aktuator 98 in Tätigkeit versetzen, wodurch die getragene Leitung in eine Vibration, vorzugsweise in Netzfrequenz 50 Hz versetzt wird. Es können jedoch auch andere Frequenzen oder Auslenkungen verwendet werden. Anstelle eines elektromagnetischen Aktuators kann auch ein elektromotorischer oder piezoelektrischer Aktuator verwendet werden, wobei im Fall des piezoelektrischen Aktuators höhere Frequenzen verwendet werden.

Es ist selbstverständlich dass alle Komponenten der Erfindung einzeln oder mehrfach vorhanden sein können bzw. als integrale Einheit oder über mehrere Orte verteilt vorgesehen sind.

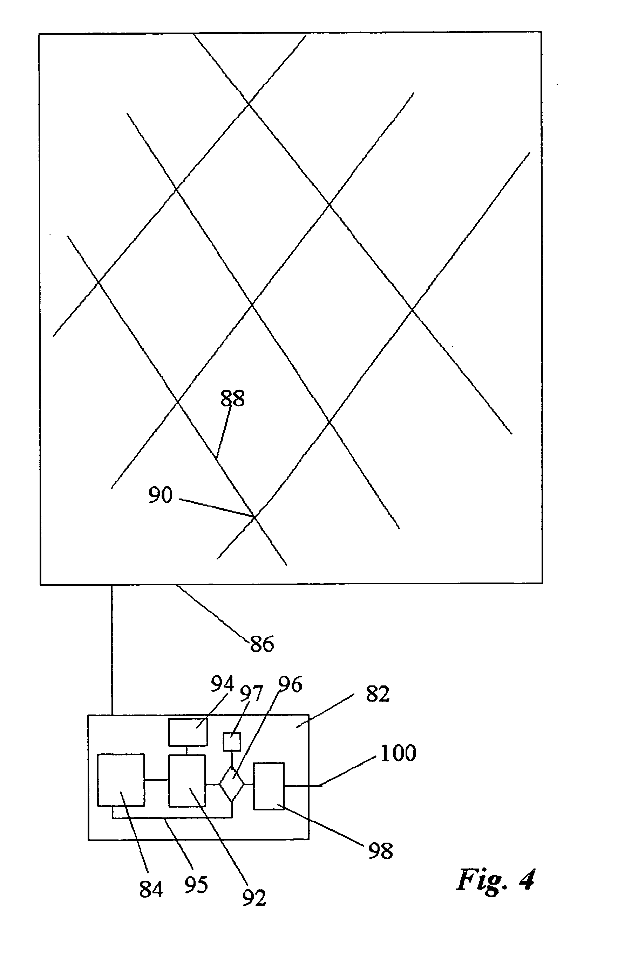

Fig. 4 zeigt eine Steuerung zur automatischen Umverteilung des Stromflusses zwischen den Überlandleitungen eines regionalen Stromnetzes. Die Steuerung 82, die z.B. in der Zentrale 80 der Fig. 3 angeordnet sein kann, enthält ein Berechnungsmodul 84 und ein Simulationsmodell 86 des regionalen Netzwerkes, in welchem die einzelnen Überlandleitungen 88 und deren Kreuzungspunkte 90 (mit den daran vorgesehenen Schaltwerken) abgebildet sind. Unter Zuhilfenahme dieses Modells erstellt das Berechnungsmodul unterschiedliche Lösungen für eine Stromumverteilung im regionalen Stromnetz. Die Lösungen werden von dem Berechnungsmodul 84 einem Bewertungsmodul 92 zugeführt, welches die Kosten der Lösung anhand einer Kostenfunktion 94 überprüft. Die Kostenfunktion 94 enthält als Kostenparameter zumindest die Stromerhöhung in der(n) betroffenen Überlandleitung(en), vorzugsweise aber auch die Minimierung der Änderung des Stromflusses in/aus nicht von der Überlast betroffene(n) Gebiete(n). Diese beiden Kostenparameter sind vorzugsweise mit Faktoren versehen, die eine Gewichtung der beiden Kostenparameter in den aus der Kostenfunktion erhaltenen Gesamtkosten einer Lösung erlauben. Die Überprüfung der Lösung in dem Berechungsmodul kann auch unter Zuhilfenahme des Simulationsmodells 86 erfolgen. In dem Bewertungsmodul oder hinter dem Bewertungsmodul ist eine Entscheidungslogik 96 vorgesehen, die entweder die Lösung in Abhängigkeit von ihren Gesamtkosten in einen Speicher 97 zum Vergleich mit nachfolgenden Lösungen ablegt, oder dem Berechungsmodul 85 über die Leitung 95 als Ausgangswert für weitere Berechungen zurückleitet. Zusätzlich überprüft die Entscheidungslogik 96 die Lösungen bzw. die Tätigkeit der Steuerung bei der Lösungsermittlung auf das Erfüllen eines Abbruchkriteriums. Derartige Abbruchkriterien sind z.B. Erreichen eines bestimmten Gesamtkostenwertes für eine Lösung, Erreichen einer gewissen Gesamtzahl an Lösungen, Erreichen einer bestimmten Anzahl an Generationen (bei Verwendung eines genetischen Algorithmus) oder Ablauf einer vorgegebenen Rechenzeit. Die Lösung mit den geringsten Gesamtkosten wird dann nach Erreichen des Abbruchkriteriums von der Entscheidungslogik 96 einem Schaltwerksteuerungsmodul 98 zugeführt. Dieses Steuerungsmodul 98 leitet aus der in der Entscheidungslogik 96 gewählten günstigsten Lösung Steuerbefehle für die Schaltwerke an den Kreuzungspunkten 90 des regionalen Stromnetzes ab, die über den Ausgang 100 direkt oder indirekt (z.B. über Funk oder eine Telekommunikationsverbindung) zur Betätigung der Schaltwerke abgegeben werden. Die einzelnen Module der Steuerung müssen nicht räumlich integriert angeordnet sein. So kann z.B. das Schaltwerksteuerungsmodul 98 zum Generieren der Schaltbefehle für die Schaltwerke dezentral an jedem lokalen Schaltwerk vorgesehen sein.

## Patentansprüche

1. Verfahren zum Erfassen und gegebenenfalls Verhindern von mechanischen Belastungen auf Leitungen (12, 14), die oberirdisch an Leitungsmasten (10) getragen werden, an welchem Leitungsmast das Gewicht wenigstens einer Leitung bzw. auf diese wirkende Kräfte über wenigstens eine Lastmesseinrichtung (26, 28) erfasst wird, welche in einer an dem Leitungsmast angeordneten Erfassungseinrichtung (33) vorgesehen ist, in welcher Erfassungseinrichtung weiterhin eine Signaleinrichtung (34) verwendet wird, um das Signal der Lastmesseinrichtung oder ein daraus abgeleitetes Signal einer Leitzentrale (80) der Versorgungswerke zuzuleiten, und aus dem Signal der Lastmesseinrichtung ein Alarm- oder Aktivierungssignal für die Einleitung von Sicherheitsmaßnahmen und/oder
Abwehmaßnahmen gebildet und bei Vorliegen des Alarm- oder Aktivierungssignals der Stromfluss in den betroffenen Leitungen (12, 14) erhöht wird, wobei der regionale Stromtransport in den Leitungen mit der Gewichtszunahme durch Abschaltung von Leitungen erhöht wird, die diese Gewichtszunahme nicht aufweisen, **dadurch gekennzeichnet, dass** die Temperatur der Leitung (12, 14) gemessen und die gemessene Temperatur der Leitung (12, 14) zur Steuerung des Stromflusses durch die Leitung verwendet wird, dass durch eine zentrale Steuerung die regionale Stromverteilung so verändert wird, dass in den betroffenen Überlandleitungen der Strom auf Kosten des Stromflusses in anderen Überlandleitungen zunimmt, und dass in der Steuerung (82) unter Anwendung eines Simulationsmodells (86) eines regionalen Stromnetzes Lösungen für eine Stromumverteilung im regionalen Stromnetz erzeugt und bewertet werden und die günstigste Lösung gewählt wird welche Bewertung anhand einer Kostenfunktion (94) erfolgt,
die als Kostenparameter die Erhöhung des Stromflusses durch wenigstens eine von mechanischer Überlast betroffene Überlandleitung enthält.

2. Verfahren nach Anspruch 1, **dadurch gekennzeichnet, dass** als weiterer Kostenparameter in der Kostenfunktion die Minimierung der Veränderung des Stromflusses von/in von der Überlast nicht betroffene Gebiete verwendet wird, welche Kostenparameter über Faktoren gewichtet werden.

3. Verfahren nach Anspruch 1 oder 2, **dadurch gekennzeichnet, dass** bei Überschreiten eines Schwellenwertes die betroffenen Leitungen (12,14) abgeschaltet werden.

4. Verfahren nach einem der Ansprüche 1 bis 3, **dadurch gekennzeichnet, dass** von der Signaleinrichtung wenigstens eine der an den Leitungsmasten (10) aufgehängten Leitungen (16) zur Signalübertragung zwischen Lastmesseimrichtung (26,28) und der Leitzentrale (80) verwendet wird.

5. Verfahren nach einem der Ansprüche 1 bis 4, **dadurch gekennzeichnet, dass** auf die Leitungen (12, 14) eine mechanische Schwingung mittels an den Leitungsmasten (10) angeordneten Aktuatoren (98) aufgebracht wird.

6. Vorrichtung zur Durchführung des Verfahrens nach einem der Ansprüche 1 bis 5 zum Erfassen und Verhindern von auf Leitungen (12,14) einwirkenden mechanischen Lasten, welche Leitungen oberirdisch an Leitungsmasten (10) aufgehängt sind, umfassend wenigstens eine an dem Leitungsmast angeordnete Erfassungseinrichtung (33) für das Gewicht der Leitung bzw. auf die Leitung wirkende Kräfte, welche Erfassungseinrichtung wenigstens eine Lastmesseinrichtung (26, 28) und eine Signaleinrichtung (34) enthält, um das Signal der Lastmesseinrichtung oder ein daraus abgeleitetes Signal einer Leitzentrale (80) Zuzuleiten, die Mittel (56, 58, 60) zum Schalten von Leitungen (12, 14) und zum Variieren des Stromflusses über die Leitungen umfasst, **dadurch gekennzeichnet, dass** die Erfassungseinrichtung (33)
wenigstens eine Messeinrichtung (44,46) für die Temperatur der Leitung (12, 14) aufweist, und dass die Vorrichtung eine Steuerung (82) aufweist, die den Strom in Abhängigkeit von der gemessenen Temperatur steuert, wobei die Steuerung (82) mittels eines Simulationsmodelk(86) des regionalen Stromnetzes, eines Berechnungsmoduls (84) und eines Bewertungsmoduls (92) die günstigste Lösung wählt, welches Bewertungsmodul die Lösungen des Berechungsmoduls anhand einer Kostenfunktion (94) bewertet die als Kostenparameter die Erhöhung des Stromflusses durch wenigstens eine von mechanisher Überlast betroffene Überlandleitung enthält.

7. Vorrichtung nach Anspruch 6,
**dadurch gekennzeichnet, dass** die Signaleinrichtung (34) über eine Leitung (16) mit der Leitzentrale (80) verbunden ist.

8. Vorrichtung nach einem der Ansprüche 6 bis 7, **dadurch gekennzeichnet, dass** an Leitungsmasten (10) wenigstens ein Aktuator (98) zum Aufbringen einer mechanischen Schwingung auf die Leitung (12, 14) vorgesehen ist.

9. Vorrichtung nach einem der Ansprüche 6 bis 8, **dadurch gekennzeichnet, dass** die Erfassungseinrichtung (33) einen Temperatursensor (40) für die Umgebungstemperatur
und/oder Sensoren (42) für Witterungsverhältnisse wie Schnee oder Regen aufweist.

## Claims

1. Method for determining and if applicable preventing mechanical loads on lines (12, 14), which are carried above ground on pylons (10), the weight of at least one line or forces acting thereon being detected at said pylon by way of at least one load measurement means (26, 28), which is provided in a detection means (33) arranged on the pylon, in which detection means a signalling means (34) is further used so as to supply the signal of the load measurement means or a signal derived therefrom to a control centre (80) of the power system, and an alarm or activation signal for introducing safety measures and/or protection measures is formed from the signal of the load measurement means, and if the alarm or activation signal is present, the flow of current in the affected lines (12, 14) is increased, the regional current transportation in the lines with the increase in weight being increased by disconnecting lines which do not have this increase in weight, **characterised in that** the temperature of the line (12, 14) is measured and the measured temperature of the line (12, 14) is used for controlling the flow of current through the line, **in that** the regional current distribution is changed by a central control system in such a way that the current increases in the affected overground lines at the cost of the flow of current in other overground lines, and **in that** solutions for a current redistribution in the regional power network are produced and evaluated in the control system (82), and the most favourable solution is selected, using a simulation model (86) of a regional power network, said evaluation being carried out using a cost function (94) which includes, as a cost parameter, the increase in the flow of current through at least one overground line which is affected by mechanical overload.

2. Method according to claim 1, **characterised in that** the minimisation of the change in the flow of current of/in regions unaffected by the overload is used as a further cost parameter in the cost function, said cost parameters being weighted using factors.

3. Method according to either claim 1 or claim 2, **characterised in that** the affected lines (12, 14) are disconnected if a threshold is exceeded.

4. Method according to any one of claims 1 to 3, **characterised in that** at least one of the lines (16) suspended on the pylons (10) is used by the signalling means for the signal transmission between the load measurement means (26, 28) and the control centre (80).

5. Method according to any one of claims 1 to 4, **characterised in that** a mechanical oscillation is applied to the lines (12, 14) by means of actuators (98) arranged on the pylons (10).

6. Device for carrying out the method according to any one of claims 1 to 5 for determining and preventing mechanical loads on lines (12, 14), which are carried above ground on pylons (10), comprising at least one detection means (33), arranged on the pylon, for the weight of the line or forces acting on the line, said detection means including at least a load measurement means (26, 28) and a signalling means (34) so as to supply the signal of the load measurement means or a signal derived therefrom to a control centre (80), which comprises means (56, 58, 60) for switching lines (12, 14) and varying the flow of current over the lines, **characterised in that** the detection means (33) has at least one measurement means (44, 46) for the temperature of the line (12, 14), and **in that** the device comprises a control system (82) which controls the current as a function of the measured temperature, the control system (82) selecting the most favourable solution by means of a simulation model (86) of the regional power network, a calculation module (84) and an evaluation module (92) which evaluates the solutions of the calculation module by means of a cost function, which includes, as a cost parameter, the increase in the flow of current through at least one overground line which is affected by mechanical overload.

7. Device according to claim 6, **characterised in that** the signalling means (34) is connected to the control centre (80) via a line (16).

8. Device according to any one of claims 6 to 7, **characterised in that** at least one actuator (98) is provided on pylons (10) for applying a mechanical oscillation to the line.

9. Device according to any one of claims 6 to 8, **characterised in that** the detection means (33) has a temperature sensor (40) for the ambient temperature and/or sensors (42) for weather conditions such as snow or rain.

## Revendications

1. Procédé pour détecter et le cas échéant empêcher des charges mécaniques sur des lignes (12, 14) qui sont supportées en installation aérienne sur des pylônes électriques (10), sur lequel pylône électrique le poids d'au moins une ligne ou des forces agissant sur celle-ci est détecté par l'intermédiaire d'au moins un dispositif de mesure de charge (26, 28), qui est prévu dans un dispositif de détection (33) disposé sur le pylône électrique, dans lequel dispositif de détection un dispositif de signalisation (34) est en outre utilisé pour transmettre aux services de distribution le signal du dispositif de mesure de charge ou un signal d'une centrale de commande (80) en découlant, et un signal d'alarme ou d'activation est formé pour déclencher des mesures de sécurité et/ou de protection à partir du signal du dispositif de mesure de charge et, en cas de présence du signal d'alarme et d'activation, le flux électrique est augmenté sur les lignes concernées (12, 14), le transport de courant régional sur des lignes avec l'augmentation de poids étant augmenté par la coupure de lignes qui ne présentent pas cette augmentation de poids, **caractérisé par le fait que** la température de la ligne (12, 14) est mesurée et la température mesurée de la ligne (12, 14) est utilisée pour la commande du flux électrique à travers la ligne,
que la distribution électrique régionale est modifiée par une commande centrale de telle sorte que, sur les lignes aériennes concernées, le courant augmente au détriment du flux électrique sur d'autres lignes aériennes, et
que des solutions pour une redistribution électrique dans le réseau électrique régional sont générées et évaluées dans la commande (82) en utilisant un modèle de simulation (86) d'un réseau électrique régional, et la solution la plus favorable est choisie, laquelle évaluation s'effectuant à l'aide d'une fonction de coûts (94), qui comporte, comme paramètre de coûts, l'augmentation du flux électrique à travers au moins une ligne aérienne concernée par la surcharge mécanique.

2. Procédé selon la revendication 1, **caractérisé par le fait que** la réduction au minimum de la modification du flux électrique depuis/vers les zones non concernées par la surcharge est utilisée comme paramètre de coûts supplémentaire, lesquels paramètres de coûts étant pondérés par des facteurs.

3. Procédé selon la revendication 1 ou 2, **caractérisé par le fait que**, en cas de dépassement d'une valeur seuil, les lignes (12, 14) concernées sont coupées.

4. Procédé selon l'une des revendications 1 à 3, **caractérisé par le fait qu'**au moins une des lignes (16) accrochées aux pylônes électriques (10) du dispositif de signalisation est utilisée pour la transmission de signalisation entre le dispositif de mesure de charge (26, 28) et la centrale de commande (80).

5. Procédé selon l'une des revendications 1 à 4, **caractérisé par le fait qu'**une oscillation mécanique est appliquée sur les lignes (12, 14) au moyen d'actionneurs (98) disposés sur les pylônes électriques (10).

6. Dispositif d'exécution du procédé selon l'une des revendications 1 à 5 pour détecter et empêcher des charges mécaniques agissant sur des lignes (12, 14), lesquelles lignes étant accrochées en installation aérienne à des pylônes électriques (10), comprenant au moins un dispositif de détection (33) disposé sur le pylône électrique pour le poids de la ligne ou des forces agissant sur la ligne, lequel dispositif de détection contenant au moins un dispositif de mesure de charge (26, 28) et un dispositif de signalisation (34) pour transmettre le signal du dispositif de mesure de charge ou un signal en découlant à une centrale de commande (80), qui regroupe des moyens (56, 58, 60) pour commuter des lignes (12, 14) et pour varier le flux électrique sur les lignes, **caractérisé par le fait**
**que** le dispositif de détection (33) présente au moins un dispositif de mesure (44, 46) pour la température de la ligne (12, 14), et
**que** le dispositif présente une commande (82) qui commande le courant en fonction de la température mesurée, la commande (82) choisissant la solution la plus favorable au moyen d'un modèle de simulation (86) du réseau électrique régional, d'un module de calcul (84) et d'un module d'évaluation (92), lequel module d'évaluation évaluant les solutions du module de calcul à l'aide d'une fonction de coûts (94), qui comporte, comme paramètre de coûts, l'augmentation du flux électrique à travers au moins une ligne aérienne concernée par la surcharge mécanique.

7. Dispositif selon la revendication 6, **caractérisé par le fait que** le dispositif de signalisation (34) est relié par l'intermédiaire d'une ligne (16) à la centrale de commande (80).

8. Dispositif selon l'une des revendications 6 à 7, **caractérisé par le fait qu'**au moins un actionneur (98) est prévu sur des pylônes électriques (10) pour l'application d'une oscillation mécanique sur la ligne (12, 14).

9. Dispositif selon l'une des revendications 6 à 8, **caractérisé par le fait que** le dispositif de détection (33) présente un capteur de température (40) pour la température ambiante et/ou des capteurs (42) pour des intempéries atmosphériques comme la neige ou la pluie.
